Europäisches Patentamt

European Patent Office

Office européen des brevets

(11) Publication number: **0 036 241**
**B1**

(12) **EUROPEAN PATENT SPECIFICATION**

(45) Date of publication of patent specification: **28.11.84**

(21) Application number: **81200305.1**

(22) Date of filing: **19.03.81**

(51) Int. Cl.³: **C 13 F 3/02,** C 13 F 5/00, B 65 G 37/02

(54) Method and arrangement for conveying groups of cubes from a moulding press through a conditioning device.

(30) Priority: **19.03.80 NL 8001629**

(43) Date of publication of application:
**23.09.81 Bulletin 81/38**

(45) Publication of the grant of the patent:
**28.11.84 Bulletin 84/48**

(84) Designated Contracting States:
**DE FR GB NL SE**

(56) References cited:
**FR-A-2 306 788**
**GB-A- 693 614**
**GB-A-2 010 903**
**US-A-2 640 580**

(73) Proprietor: **STORK BEPAK B.V.**
**2 Groeneweg**
**NL-3531 VE Utrecht (NL)**

(72) Inventor: **Willerding, József**
**82 Buntlaan**
**NL-3971 JE Driebergen (NL)**

(74) Representative: **Mathol, Heimen et al**
**EXTERPATENT Willem Witsenplein 4**
**NL-2596 BK 's-Gravenhage (NL)**

Courier Press, Leamington Spa, England.

## Description

The invention relates to a method for loading and transporting articles by means of a conveyor system operating with rectangular trays upon which the articles are loaded, said system comprising a main conveyor upon which the trays are transported from an article producing machine through at least one treatment station towards a discharge station, where the treated articles are removed from the trays, the conveyor system comprising transversely travelling sub-conveyors for connection to the main conveyor, said sub-conveyors being connected to a transfer conveyor. Such a method is known from US—A—2,640,580 and is described more in particular for transporting articles through various work stations.

The present invention deals in particular with the transport of articles which have just been produced and which are in a weak and vulnerable condition. The invention therefore relates in the first place to an improvement in connection with the loading of the trays. According to the invention the method is distinguished in that the supply of the articles to the trays is effected from at least one delivery station of the article producing machine, said supply being performed groupwise to each tray by at least one and at most two article producing machines, a number of said kind of machines each cooperating with at least one and at most two sub-conveyors, a series of article groups being subsequently delivered in a straight row upon the stepwise passing trays, each tray maintaining its orientation during its course, through the whole conveyor system.

The invention relates in particular to a method for loading and conveying cubes of granular material such as moisturized crystallized sugar, in which the article producing machine is a moulding press, towards a conditioning device. According to the invention the supply of the cubes is performed stepwise by means of at least one double acting cube-moulding press with a rotating moulding table cooperating with two parallel stepwise moving sub-conveyors, one on each side of the rotating table, a further transfer conveyor transporting the trays at the ends of said parallel sub-conveyors in a direction parallel to the main conveyor such, that at least one straight row of article groups is delivered upon each tray.

According to this method the trays are stepwise displaced over a short distance just enough to take up a new group of sugar cubes. After the completion of the loading operation, the concerning tray will move along the different conveyors without changing its position so that the vulnerable cubes are not subjected to dangerous accelerating forces or shocks.

A compact loading of each tray is obtained when within the conveyor system, each tray is cooperating with two moulding presses in such a manner that each tray is loaded with at least two parallel rows of article groups. Due to this feature the loading of the trays takes place at several stations simultaneously, rendering it possible to reduce the travelling speed and yet obtain a good efficiency.

A further object of the invention consists in proposing an installation for applying the above described method, comprising a main conveyor, at least one article producing machine with a plurality of sub-conveyors directed sidewardly from said main conveyor and at least one further conveyor movable parallel to the direction of travel of the main conveyor and interconnecting at least two sub-conveyors, said conveyors carrying rectangular trays for articles to be transported, said main conveyor passing along said at least one producing machine to at least one treatment station and a discharge station. Such an arrangement is also known from the abovementioned US—A—2,640,580. According to the invention at least one article producing machine is enclosed between two subconveyors lying perpendicular to the main conveyor.

Due to the transverse position of the trays upon the main conveyor, a short travelling distance is sufficient to present a new tray to a subconveyor which will transport the concerning tray in lengthwise direction. In that position the tray passes along one or more article producing machines for receiving freshly produced articles.

The invention relates in particular to an arrangement in which each article producing machine comprises a moulding device for preparing cubes of granular materials, such as moisturized crystallized sugar. According to the invention such an arrangement is distinguished in that the moulding device consists of a stepwise operating double-acting cube-moulding press cooperating on either sides with a stepwise moving sub-conveyor, the first one moving away from the main conveyor, the second one travelling in the opposite direction. In such an arrangement the trays will be loaded with at least two parallel rows of article groups.

According to a further aspect of the invention, the arrangement comprises an installation known per se from GB—A—693,614, in which a main conveyor and a number of auxiliary conveying means pass through a first treatment station comprising sources of radiation heat above the conveyor. According to the invention the supply side at the beginning of said treatment station is provided with an air inlet connected with an outlet for exhaust air.

It is finally observed that from GB—A—2,010,903 a treatment station for sugar cubes or lumps is known using infra-red heaters for gradually drying the sugar cubes.

The previously discussed features together with further features of the present invention will now be described more in detail in the following specification thereby referring to the accompanying drawings.

Fig. 1 is a diagrammatic plan view of a conveyor system with a part of a main conveyor belonging to the installation;

Fig. 2 is a diagrammatic side view of the complete installation comprising a vertical section through a treatment station;

Fig. 3 is a diagrammatic plan view of a structural variant of the main conveyor as shown in Fig. 1;

Fig. 4 is a plan view of a moulding machine to be used in the installation; and

Fig. 5 is a diagrammatic plan view of a conveyor system in an embodiment differing from the one as shown in Fig. 3.

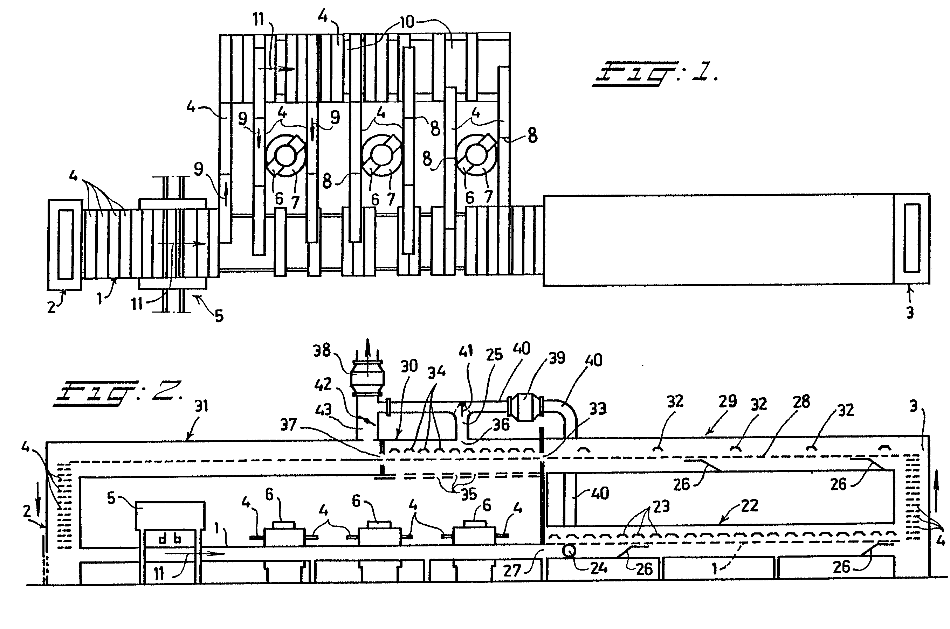

The installation shown in Figs. 1 and 2 comprises a main conveyor 1 which travels from a downwardly travelling conveyor shaft 2 of a treatment chamber towards a second upward moving conveyor shaft 3 of said treatment station. The main conveyor 1 carries separate transversely positioned trays 4 which travel below a discharge or delivery station 5. The installation further comprises several article producing machines 6, each being embodied as a double acting cube-moulding press, and comprising a moulding table 7 rotating in a horizontal plane. An embodiment of such a press is described in EP—A—81 200141. Cubes or lumps shaped from crystallized sugar are pushed in successive groups of blocks, sidewise of the path of the main conveyor 1, upon trays 4 lying lengthwise upon a sub-conveyor 8. Successive groups of said cubes or lumps are loaded in groups parallel with the longitudinal direction of the trays 4, as will be described hereinafter in connection with Fig. 4. Arrows 9 in Fig. 1 show the travelling direction of the trays 4 transverse to the path of the main conveyor 1. The sub-conveyors 8 move stepwise in accordance with the movement of the table 7.

Fig. 1 shows that between each two adjacent sub-conveyors 8 a moulding press 6 is installed. A third transfer conveyor 10 is running in the direction of arrow 11 from one sub-conveyor 8 towards the other sub-conveyor 8 parallel with the main conveyor 1. Both conveyors 1 and 10 are moving in the same travelling direction. Fig. 1 shows that for the three moulding presses 6 and seven sub-conveyors 8, only one transfer conveyor 10 is used.

The sub-conveyors 8 adjacent the presses 6 are running in the same direction i.e. towards the main conveyor 1.

The embodiment according to Fig. 3 differs from the one described with reference to Fig. 1 in that both sub-conveyors 8 cooperating with a moulding press 6 are moving in opposite direction. The transfer conveyor 10 consists of three separate parts, one for each press 6. During each passage of a tray 4 along one side of the moulding press 6, the articles (sugar cubes) are pushed upon the tray such that a straight row of articles is formed thereupon.

In both embodiments of the conveyor system as shown in Figs. 1 and 3 the main conveyor 1 and the transfer conveyor 10 are advancing continuously, whereas the sub-conveyors 8 are moving stepwise. The steps mainly correspond to the stepwise rotation of the table 7 as will be explained hereafter with reference to Fig. 4. The trays 4 are lifted from the conveyors 1 and 10 with means (not shown) known per se and then put on the concerning sub-conveyor 8. The same kind of means are used for lowering the trays 4 from the sub-conveyors 8 upon the transfer conveyor 10 or upon the main conveyor 1.

The loading of the trays 4 with groups of sugar cubes will be illustrated with respect to Fig. 4. Said Figure shows a double acting cube-moulding machine 6 corresponding to the one as described in EP—A—81200141. The moulding press 6 is a double acting machine and comprises two diametrically opposite filling hoppers 12 above the stepwise rotating table 7. This table 7 comprises a carousel of eight groups of shaping or moulding cavities 13. Fig. 4 shows two groups of cavities 13 just leaving from below a cleaning device 14. When the table 7 rotates in the direction of arrow 15, two groups of cavities 13 arrive below a filling hopper 12, whilst two other groups of cavities 13 have each reached a pressure means 16, both being shown in Fig. 4 in dotted lines. The two pressure means 16 will press the crystallized sugar dropped from the hoppers 12 to cubes or lumps in the cavities 13.

On further rotation of the table 7 the groups of cavities 13 will subsequently arrive at a delivery station 17, there being two stations 17 per machine 6. The number of groups of cavities 13 is such that periodically one group is present at each of the stations 12, 14, 16 and 17. This permits all described treatments to be performed simultaneously and twice per step of the moulding table 7. The delivery stations 17 are accommodated in front of a tray 4 upon a sub-conveyor 8. The trays 4 are flush with the level of the table 7 at the delivery station 17. As the moulding table 7 is driven intermittently, the trays 4 are likewise displaced intermittently, or stepwise by the sub-conveyor 8. Arrow 18 illustrates the travelling direction of the trays 4. Finally the machine 6 comprises a bridge element 19 for levelling the forces occurring in the pressure means 16.

Above the delivery stations 17 reciprocating sliding transverse combs 20 are positioned between the cubes or lumps which are being pressed upwardly from the cavities 13. These combs 20 are able to push a group 21 of cubes or lumps upon one half of the supplied trays 4 as shown in Figs. 3 and 4. After loading one half of a tray 4 with a row of lengthwise positioned groups 21 of cubes or lumps, said tray is displaced parallel with itself through the transfer conveyor 10 towards the other side of the moulding machine 6, and is subsequently stepwisely conveyed along the other side of the machine upon a sub-conveyor 8. As the previously loaded row of groups 21 of cubes and lumps is now lying upon the half of the tray 4 directed away from the machine the other half of the tray 4 is now loaded with groups 21 of cubes or lumps, in a manner corresponding to that as described hereinbefore. At a subsequent displacement of the tray 4 according to arrow 18 towards the main conveyor, said tray therefore comprises two parallel rows of cubes or lumps.

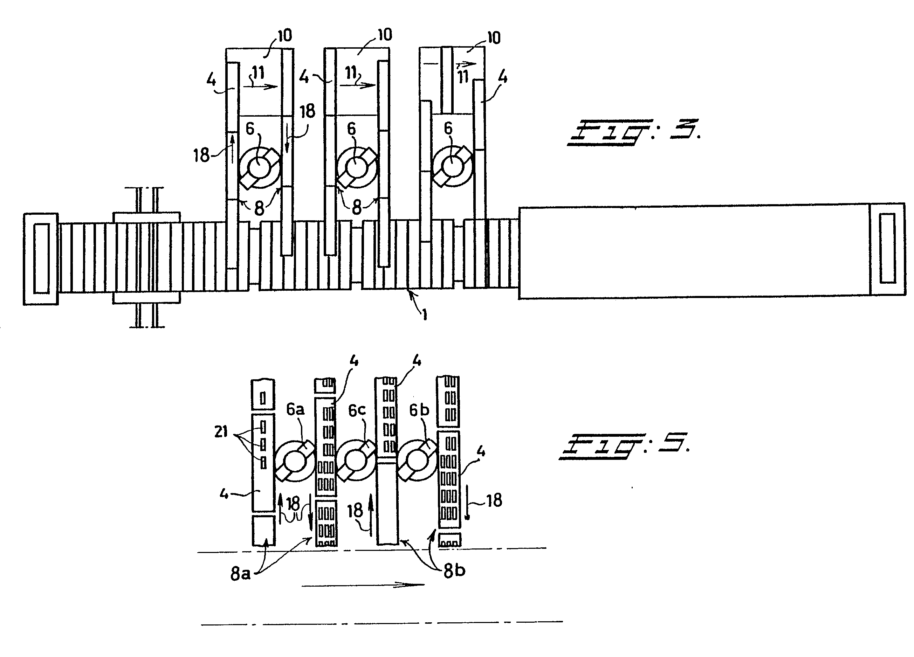

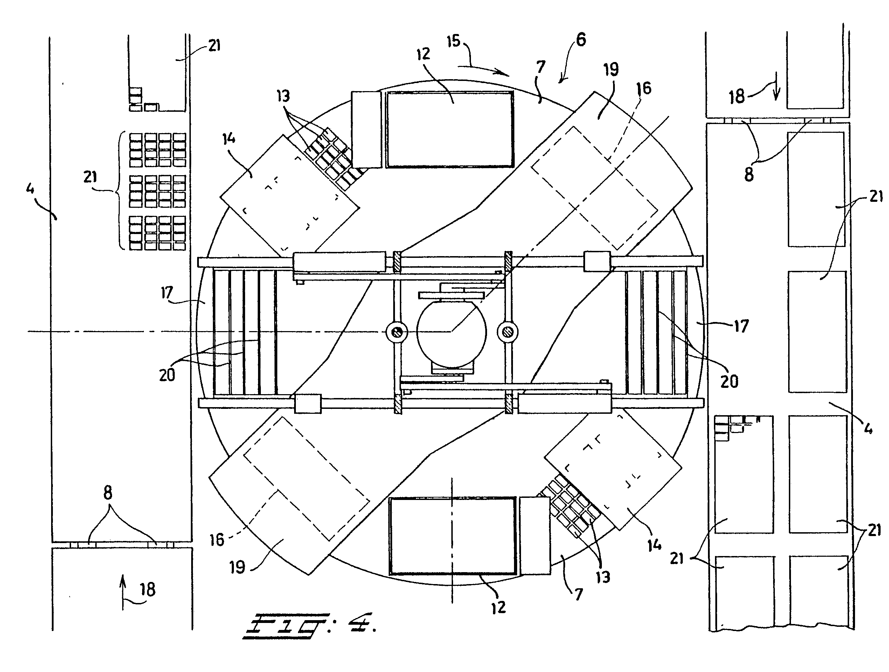

In the embodiment of Fig. 5 the conveyor system comprises two pairs of sub-conveyors 8 and three moulding machines 6 disposed between the sub-conveyors. The first pair of the sub-conveyors 8a cooperates with the machine 6a, the second pair of sub-conveyors 8b encompasses the machine 6b. The distance between the two pairs of sub-conveyors 8a and 8b is such, that the third moulding machine 6c fits in between these sub-conveyors. The machine 6a first deposes groups 21 of shaped cubes or lumps in the centre of a tray 4 and simultaneously at the side of a returning tray 4. The machine 6c likewise deposes groups 21 of shaped cubes or lumps at the side of the same returning tray 4. Simultaneously the machine 6c pushes groups 21 of cubes or lumps in the centre of an arriving tray 4 of a sub-conveyor 8b. The moulding machine 6b simultaneously deposes groups 21 of cubes or lumps upon the side of a tray 4 derived from the main conveyor 1 and also upon the side of a tray 4 travelling towards the main conveyor 1. It will be clear that if a malfunction or a check up of one of the moulding machines occurs, the treatment operation need not be interrupted as the remaining machines will still load the trays, however, to a decreased extent.

The treatment operation for the sugar cubes will be illustrated with respect to Fig. 2. The main conveyor 1 comprising trays 4 having been loaded through one or more of the sub-conveyors 8, subsequently travels through a first station 22 comprising sources 23 of radiation heat above said conveyor 1. At the entry of said station 22, an inlet 24 for air is connected with a branch conduit 25 of exhaust air from the treatment station. The sources 23 of radiation heat may be infra-red radiators. Consequently a high degree of humidity prevails in chamber 22, due to the supply of previously humidified process air from the inlet 24 and the presence of the still humidified (moisturized) sugar cubes or lumps upon the conveyor 1. The chamber 22 comprises guiding partitions 26 in order to guide air above and around the cubes or lumps upon the trays 4 of the conveyor 1. The main conveyor 1 ends at a shaft 3 comprising an auxiliary device for a vertical conveyance of the trays 4. Said shaft 3 is adapted as a second or residence chamber in the treatment station and comprises treatment air being composed from air derived from inlet 24 towards first station 22 being mixed, if necessary, with fresh air supplied towards said first chamber by a second inlet 27 in said first station 22.

Parallel with the main conveyor 1 an auxiliary conveying means 28 is connected with the upper end of the auxiliary device in the shaft 3. Said auxiliary conveying means passes through a third, fourth and fifth station 29, 30, 31 respectively. A relatively small number of sources 32 for radiation heat are distributed along the length of said third station 29 above said auxiliary conveying means 28. Said station 29 also comprises guide partitions 26 adapted to guide a current of air around the cubes or lumps. An opening 33 forming an adjustable passage for treatment air to be sucked off from the first, second and third station, is provided between the third and fourth station 29, 30 respectively, beside the cross section of the auxiliary conveying means 28. The fourth station 30 possesses a relatively large number of sources 34 for radiation heat above the auxiliary conveying means 28. At the bottom of station 30 a number of openings 35 having an adjustable inlet are provided, for sucking in fresh air which is drawn off through an opening 36. This fresh air is used in the fourth station together with air from the third chamber, to condition the sugar cubes.

Between the fourth station 30 and the fifth station 31 an air sluice 37 is installed for separating the treatment air in said chambers. The fifth station 31 adapted as a cooling space, adjoins the shaft 2 comprising an auxiliary device for the lowering of the trays 4 and for returning said trays upon the main conveyor 1 in a manner known per se. The sucking off opening 36 in the fourth station 30 is via outlet 25, connected with sucking ventilators 38 and 39. The outlet of ventilator 39 is connected with inlet 24 for the supply of air towards the first station 22, through a channel 40. A valve 41 for the control of the quantities of circulating air towards the channel 40, is disposed in the connecting conduit between the ventilators 38 and 39. The ventilator 38 has a large capacity and is connected with the fifth station 31 at the entrance of a channel 43 being provided with a valve 42.

The features of the invention as described hereinbefore permit an optimum treatment of moulded cubes or lumps of granular material, especially sugar and only require a limited space. The main conveyor with its trays possesses a great loading capacity, so that only a small travelling velocity suffices for an optimum performance.

As exhaust air is continuously introduced through the inlet 24, the relative humidity in the first station 22 will increase, improving the appearance of the cubes or lumps. By recycling part of the exhaust air, a considerable economy on energy is obtained as well. The heat sources consist of infra-red radiators having a wavelength of 3—5 $\mu$, which presents the advantage that said radiation is maximally absorbed by water and is likewise minimally reflected by a white sugar crystal, so that an excellent drying output is obtained.

It is observed that for an adequate operation of the described arrangement there is an obvious relationship between the speed of the different conveyors 1—3, 10 and 28, the dimensions of the trays 4 and of the groups 21 of sugar cubes and the steps of the sub-conveyor 8 and of the machine 6. The trays 4 remain in contact or in close proximity with each other on the conveyors 1, 8 and 10 so as to obtain optimum conditions during operation.

It will be clear that the auxiliary conveying means 28 need not necessarily be disposed above the main conveyor 1 but that the former may also be accommodated below said main conveyor, for instance, below the floor upon which said main conveyor is installed. In that case the operative direction of the auxiliary devices in the shafts 2 and 3 is reversed.

## Claims

1. Method for loading and transporting articles by means of a conveyor system operating with rectangular trays (4) upon which the articles are loaded, said system comprising a main conveyor (1) upon which the trays are transported from an article producing machine through at least one treatment station (22—43) towards a discharge station (5), where the treated articles are removed from the trays, the conveyor system comprising transversely travelling sub-conveyors (8) for connection to the main conveyor, said sub-conveyors (8) being connected to a transfer conveyor (10), characterized in that the supply of the articles to the trays (4) is effected from at least one delivery station (17) of the article producing machine, said supply being performed groupwise to each tray by at least one and at most two article producing machines (6), a number of said kind of machines each cooperating with at least one and at most two sub-conveyors (8), a series of article groups being subsequently delivered in a straight row upon the stepwise passing trays, each tray maintaining its orientation during its course, through the whole conveyor system.

2. Method according to claim 1, in particular for loading and conveying cubes of granular material such as moisturized crystallized sugar in which the article producing machine is a moulding press (6), towards a conditioning device, characterized in that the supply of the cubes is performed stepwise by means of at least one double acting cube-moulding press with a rotating moulding table (7) cooperating with two parallel stepwise moving sub-conveyors (8), one on each side of the rotating table, a further transfer conveyor 10 transporting the trays (4) at the ends of said parallel sub-conveyors in a direction parallel to the main conveyor (1), such that at least one straight row of article groups is delivered upon each tray.

3. Method according to claim 2, characterized in that within the conveyor system each tray (4) is cooperating with two moulding presses (6) in such a manner that each tray is loaded with at least two parallel rows of article groups.

4. Method according to claim 2 or 3, characterized in that the main conveyor (1) as well as the (each) transfer conveyor (10) is moving uninterruptedly with a constant speed, means being provided for transferring the empty trays successively from the main conveyor to a sub-conveyor (8), from the latter to a transfer conveyor, thereafter back to a sub-conveyor and finally in their loaded condition back to the main conveyor.

5. Installation for applying the method according to at least claim 1, comprising a main conveyor (1), at least one article producing machine with a plurality of sub-conveyors (8) directed sidewardly from said main conveyor and at least one further conveyor (10) movable parallel to the direction of travel of the main conveyor and interconnecting at least two sub-conveyors (8), said conveyors carrying rectangular trays (4) for articles to be transported said main conveyor passing along said at least one article producing machine to at least one treatment station (22—43) and a discharge station (5), characterized in that the at least one article producing machine (6) is enclosed between two sub-conveyors (8) lying perpendicular to the main conveyor (1).

6. Installation according to claim 5, in which each article producing machine comprises a moulding device (6) for preparing cubes of granular material such as moisturized crystallized sugar, characterized in that the moulding device consists of a stepwise operating double acting cube-moulding press (6) cooperating on either sides with a stepwise moving sub-conveyor (8), the first one moving away from the main conveyor, the second one travelling in the opposite direction.

7. Installation according to claim 6, characterized in that the conveyor system comprises three double-sided article producing machines (6) cooperating on either side with a stepwise moving sub-conveyor (8) each pair of adjacent machines (6) cooperating with a common sub-conveyor (8) passing between them, to obtain a loading pattern on the trays consisting of three rows of article groups (Fig. 5).

8. Installation according to any of claims 5—7 in which the main conveyor (1) and a number of auxiliary conveying means (28) pass through a first treatment station (22) comprising sources (23) of radiation heat above the conveyor, the supply side at the beginning of said treatment station is provided with an air inlet (24) connected with an outlet (25) for exhaust air.

9. Installation according to claim 8, in which the main conveyor (1) ends at a shaft (3) comprising a device for a vertical transport of the trays (4), said shaft being adapted as a second or residence chamber in the treatment station, treatment air being supplied, composed of air derived from the inlet (24) towards the first chamber (22) and, if necessary, mixed with fresh air being supplied towards the first chamber from an inlet (27) in said first chamber.

10. Installation according to claim 9, the auxiliary conveying means (28) being connected parallel with the main conveyor (1) and with the shaft (3) for vertically conveying trays in the shaft, the auxiliary conveying means (28) passing through a third (29), fourth (30) and fifth (31) treatment station, the third station comprising a relatively small number of sources (32) for radiation heat distributed lengthwise along said third chamber, above the auxiliary conveying means, an inlet (33) having an adjustable passage for treatment air to be sucked off from the first, second and third station, being installed between the third and fourth station, together with the passage for the auxiliary conveying means, said fourth station comprising a relatively great number of sources (34) for radiation heat.

11. Installation according to claim 10, characterized in that, between the fourth (30) and fifth (31) treatment station a sluice (37) for the separation of air is installed, the fifth station being adapted as a counter current cooling space and adjoining a shaft (2) which comprises a device for the vertical return of trays (4) in a known manner, towards the main conveyor.

**Patentansprüche**

1. Verfahren zum Ablegen und Transportieren von Produkten mit Hilfe eines Transportsystems, welches mit rechteckigen flachen Trageeinrichtungen (4) arbeitet, auf welche die Produkte abgelegt werden, wobei das Transportsystem eine Haupttransporteinrichtung (1) umfaßt, mit Hilfe welcher die Trageeinrichtungen (4) von einer produkterzeugenden Maschine durch wenigstens eine Bearbeitungsstation (22 bis 43) zu einer Entnahmestation (5) befördert werden, wo die bearbeiteten Produkte von den Trageeinrichtungen entfernt werden, und wobei das Transportsystem querverlaufende Untertransporteinrichtungen (8) zur Verbindung mit der Haupttransporteinrichtung umfaßt, wobei diese Untertransporteinrichtungen (8) untereinander durch einen Quertransporteur (10) verbunden sind, dadurch gekennzeichnet, daß die Zuführung der Produkte zu den Trageeinrichtungen (4) aus wenigstens einer Ausgabestation (17) der Produktherstellungsmaschine bewerkstelligt wird, wobei die Zuführung zu jeder Trageeinrichtung gruppenweise mittels wenigstens einer und höchstens zweier Produktherstellungsmaschinen (6) erfolgt, wobei eine Zahl dieser Maschinen jeweils mit wenigstens einer und höchstens zwei Untertransporteinrichtungen (8) zusammenwirken, und wobei eine Serie von Produktgruppen aufeinanderfolgend in einer geraden Reihe auf den schrittweise vorbeigeführten Trageeinrichtungen abgelegt wird, und wobei jede Trageeinrichtung ihre Orientierung während ihrer Bewegung durch das ganze Transportsystem aufrechterhält.

2. Verfahren nach Anspruch 1, insbesondere zur Aufnahme und Beförderung von Würfeln körnigen Materials, wie z.B. befeuchteten kristallisierten Zuckers, wobei die Produktherstellungsmaschine eine Formpresse (6) ist, zu einer Konditioniervorrichtung, dadurch gekennzeichnet, daß die Zuführung der Würfel schrittweise mittels wenigstens einer doppelseitig arbeitenden Würfelformpresse mit einem rotierenden Formtisch (7) erfolgt, der mit zwei parallelen, sich schrittweise bewegenden Untertransporteinrichtungen (8) zusammenarbeitet, welche jeweils an einer Seite des drehbaren Tisches angeordnet sind, wobei ein Quertransporteur (10) die Trageeinrichtung (4) an den Enden der parallelen Unterfördereinrichtungen in einer Richtung parallel zu der Hauptfördereinrichtung (1) derart transportiert, daß wenigstens eine gerade von Produktgruppen auf jeder Trageeinrichtung transportiert wird.

3. Verfahren nach Anspruch 2, dadurch gekennzeichnet, daß innerhalb des Transportsystems jede Trageeinrichtung (4) mit zwei Formpressen (6) derart zusammenarbeitet, daß jede Trageeinrichtung mit wenigstens zwei parallelen Reihen von Produktgruppen beladen wird.

4. Verfahren nach Anspruch 2 oder 3, dadurch gekennzeichnet, daß die Haupttransporteinrichtung (1) ebenso wie jeder Quertransporteur (10) sich mit konstanter Geschwindigkeit ohne Unterbrechung bewegt, wobei Einrichtungen zur aufeinanderfolgenden Überführung der leeren Trageeinrichtungen von der Haupttransporteinrichtung zu einer Untertransporteinrichtung (8), von dieser zu einem Quertransporteur und danach zurück zu einer Untertransporteinrichtung und schließlich im beladenen Zustand zurück zu der Haupttransporteinrichtung vorgesehen sind.

5. Vorrichtung zur Durchführung des Verfahrens nach Anspruch 1 umfassend eine Haupttransporteinrichtung (1), wenigstens eine Produktherstellungsmaschine mit einer Mehrzahl von Untertransporteinrichtungen (8), welche seitlich der Haupttransporteinrichtung verlaufen und wenigstens einen weiteren Transporteur (10), welcher sich parallel zur Bewegungsrichtung des Haupttransporteurs bewegt und wenigstens zwei Untertransporteinrichtungen (8) verbindet, wobei diese Transporteinrichtungen rechteckige Trageeinrichtungen (4) für die zu transportierenden Produkte tragen, und wobei die Haupttransporteinrichtung längs wenigstens einer Produktherstellungsmaschine zu wenigstens einer Behandlungsstation (22 bis 43) und einer Ausgabestation (5) verläuft, dadurch gekennzeichnet, daß die wenigstens eine Produktherstellungsmaschine (6) zwischen den beiden Untertransporteinrichtungen (8), welche senkrecht zu der Haupttransporteinrichtung (1) verlaufen, angeordnet ist.

6. Vorrichtung nach Anspruch 5, wobei jede Produktherstellungsmaschine eine Formvorrichtung (6) zur Herstellung von Würfeln aus körnigem Material, wie z.B. befeuchtetem, kristallisiertem Zucker umfaßt, dadurch gekennzeichnet, daß die Formvorrichtung eine schrittweise arbeitende, doppelseitig wirksame Würfelform-Presse (6) umfaßt, welche an beiden Seiten mit einer stufenweise sich bewegenden Untertransporteinrichtung (8) zusammenwirkt, wovon die erste von der Haupttransporteinrichtung weg und die zweite in entgegengesetzter Richtung führt.

7. Vorrichtung nach Anspruch 6, dadurch gekennzeichnet, daß das Transportsystem drei doppelseitige Produktherstellungsmaschinen (6) umfaßt, welche an jeder Seite mit einer sich stufenweise bewegenden Untertransporteinrichtung (8) zusammenwirken, wobei jedes Paar benachbarter Maschinen (6) mit einer gemeinsamen Untertransporteinrichtung (8) zusammenwirkt, welche zwischen diesen vorbeiläuft, um auf diese Weise ein Beschickungsmuster auf den Trageeinrichtungen zu erhalten, welches aus drei Reihen von Produktgruppen (vgl. Fig. 5) besteht.

8. Vorrichtung nach einem der Ansprüche 5 bis 7, dadurch gekennzeichnet, daß die Haupttransporteinrichtung (1) und eine Anzahl von Hilfstransporteinrichtungen (28) durch eine erste Bearbeitungsstation (22) mit Strahlungswärmequellen (23) oberhalb der Transporteinrichtungen passieren, wobei die Zuführseite am Anfang der Behandlungsstation mit einem Lufteinlaß (24) versehen ist, welcher mit einem Auslaß (25) zum Luftauslaß verbunden ist.

9. Vorrichtung nach Anspruch 8, dadurch gekennzeichnet, daß die Haupttransporteinrichtung (1) an einer Welle (3) endet, welche eine Vorrichtung zum vertikalen Transport der Trageeinrichtungen (4) umfaßt, wobei die Welle als zweite oder als Verweilkammer der Behandlungsstation ausgelegt ist, wobei Luft zur Behandlung zugeführt wird, welche zusammengesetzt ist aus Luft von dem Einlaß (24) zu der ersten Kammer (22), und welche erforderlichenfalls mit Frischluft gemischt wird, welche zu der ersten Kammer durch einen Einlaß (27) in der selben geführt wird.

10. Vorrichtung nach Anspruch 9, dadurch gekennzeichnet, daß die Hilfstransporteinrichtung (28) parallel mit der Haupttransporteinrichtung (1) und der Welle (3) zum vertikalen Transport der Trageeinrichtungen in der Welle verbunden ist, wobei die Hilfstransporteinrichtungen (28) eine dritte (29), vierte (30) und fünfte (31) Behandlungsstation durchlaufen, wobei die dritte Station eine relativ geringe Zahl von Wärmestrahlungsquellen (32) aufweist, welche längs in der dritten Kammer oberhalb der Hilfstransporteinrichtungen verteilt sind, wobei ein Einlaß (33) eine einstellbare Öffnung für Behandlungsluft aufweist, welche aus der ersten, zweiten und dritten Station abgesaugt wird, wobei diese zwischen der dritten und vierten Kammer zusammen mit einem Durchlaß für die Hilfstransporteinrichtung angeordnet ist, und wobei die vierte Station eine relativ große Zahl von Wärmestrahlungsquellen (34) aufweist.

11. Vorrichtung nach Anspruch 10, dadurch gekennzeichnet, daß zwischen der vierten (30) und fünften (31) Behandlungsstation eine Schleuse (37) zur Trennung der Luft angeordnet ist, wobei die fünfte Station als Gegenstromkühlraum ausgebildet und sich einer Welle (2) anschließt, welche eine Vorrichtung zur vertikalen Rückführung der Trageeinrichtungen (4) zur der Haupttransporteinrichtung in an sich bekannter Weise umfaßt.

**Revendications**

1. Méthode de chargement et de transport d'objets au moyen d'un système de transport fonctionnant avec des plateaux rectangulaires (4) sur lesquels les objets sont chargés, ledit système comprenant un convoyeur principal (1) sur lequel les plateaux sont transportés d'une machine de production d'objets à travers au moins un poste de traitement (22, 43) vers un poste de déchargement (5) où les objets traités sont enlevés des plateaux, le système de transport comprenant des sous-convoyeurs (8) avançant transversalement pour relier le convoyeur principal, lesdits sous-convoyeurs (8) étant reliés à un convoyeur de transfert (10), caractérisée en ce que le chargement des objets aux plateaux (4) est réalisé à partir d'au moins un poste de déchargement (17) de la machine de production d'objets, ledit chargement étant réalisé par groupe sur chaque plateau par au moins une et au plus deux machines de production d'objets (6), un certain nombre desdites machines coopérant chacune avec au moins un et au plus deux sous-convoyeurs (8), une série de groupés d'objets étant ultérieurement chargée en rangée droite sur les plateaux passant pas à pas, chaque plateau maintenant son orientation durant son voyage dans le système de transport entier.

2. Méthode selon la revendication 1, en particulier pour charger et transporter des cubes de matériau granulaire tel que du sucre cristallisé humidifié vers un dispositif de conditionnement, dans laquelle la machine de production d'objets est une presse de moulage (6), caractérisée en ce que le chargement des cubes est réalisé pas à pas au moyen d'au moins une presse de moulage de cubes à double action comportant une table de moulage tournante (7) coopérant avec deux sous-convoyeurs (8) parallèles avançant pas à pas, un de chaque coté de la table tournante, un convoyeur supplémentaire de transfert (10) transportant les plateaux (4) aux extrémités desdits sous-convoyeurs parallèles dans une direction parallèle au convoyeur principal (1), de telle façon qu'au moins une rangée droite de groupes d'objets soit chargée sur chaque plateau.

3. Méthode selon la revendication 2, caractérisée en ce que, dans le système de transport, chaque plateau (4) coopère avec deux presses de moulage (6) de telle manière que chaque plateau est chargé d'au moins deux rangées parallèles de groupes d'objets.

4. Méthode selon la revendication 2 ou 3, caractérisée en ce que le convoyeur principal (1), tout comme le convoyeur de transfert (10) (ou chaque convoyeur de transfert) se déplace continûment à une vitesse constante, des moyens étant prévus pour transférer les plateaux vides successivement du convoyeur principal sur un sous-convoyeur (8), de ce dernier sur un convoyeur de transfert, de nouveau sur un sous-convoyeur et, finalement, quand ils sont chargés, sur le convoyeur principal.

5. Installation pour appliquer la méthode selon la revendication 1 au moins, comprenant un convoyeur principal (1), au moins une machine de production d'objets avec une pluralité de sous-convoyeurs (8) dirigés latéralement à partir dudit convoyeur principal et au moins un convoyeur (10) supplémentaire avançant parallèlement à la direction du convoyeur principal et interconnectant au moins deux sous-convoyeurs (8), lesdits convoyeurs portant des plateaux rectangulaires (4) pour le transport d'objets, ledit convoyeur principal passant le long d'au moins une machine de production d'objets vers au moins un poste de traitement (22—43) et un poste de déchargement (5), caractérisée en ce qu'au moins une machine de production d'objets (6) est comprise entre deux sous-convoyeurs (8) disposés perpendiculairement au convoyeur principal (1).

6. Installation selon la revendication 5, dans laquelle chaque machine de production d'objets comprend un dispositif de moulage (6) pour préparer des cubes de matériau granulaire tel que du sucre cristallisé humidifié, caractérisée en ce que le dispositif de moulage consiste en une presse de moulage de cubes à double action fonctionnant pas à pas (6) coopérant de chaque côté avec un sous-convoyeur avançant pas à pas (8), le premier s'éloignant du convoyeur principal et le second avançant dans la direction opposée.

7. Installation selon la revendication 6, caractérisée en ce que le système de transport comprend trois machines de production d'objets fonctionnant sur deux côtés coopérant, de chaque côté, avec un sous-convoyeur avançant pas à pas, chaque paire de machines voisines (6) coopérant avec un sous-convoyeur commun (8) passant entre elles, pour obtenir sur les plateaux un motif ou groupement consistant en trois rangées de groupes d'objets (Fig. 5).

8. Installation selon une des revendications 5 à 7, dans laquelle le convoyeur principal (1) et un certain nombre de moyens de convoyage auxiliaires (28) passent à travers un premier poste de traitement (22) comprenant des sources de rayonnement de chaleur (23) au-dessus du convoyeur, le côté arrivée dudit poste de traitement comportant une entrée d'air (24) reliée à une sortie d'air (25) pour l'évacuation de l'air.

9. Installation selon la revendication 8, dans laquelle le convoyeur principal (1) se termine à un puits (3) comportant un dispositif pour le transport vertical des plateaux (4), ledit puits étant conçu comme seconde chambre ou chambre de résidence dans le poste de traitement, l'air de traitement étant fourni à ladite première chambre, composé d'air dérivé de l'entrée (24) à la première chambre (22) et, si nécessaire, mélangé avec de l'air frais arrivant à la première chambre par une entrée (27) dans ladite première chambre.

10. Installation selon la revendication 9, les moyens de convoyage auxiliaire (28) étant reliés parallèles avec le convoyeur principal (1) et avec le puits (3) pour le convoyage vertical des plateaux dans le puits, les moyens de convoyage auxiliaire (28) passant à travers un troisième (29), un quatrième (30) et un cinquième (31) postes de traitement, le troisième poste comportant un nombre relativement petit de sources (32) de rayonnement de chaleur distribuées le long de ladite troisième chambre, au-dessus des moyens de convoyage auxiliaire, une entrée (33) réglable pour l'aspiration de l'air de traitement des premier, second et troisième postes, étant prévue entre les troisième et quatrième postes, ainsi que le passage pour les moyens de convoyage auxiliaire, ledit quatrième poste comportant un nombre relativement grand de sources (34) de rayonnement de chaleur.

11. Installation selon la revendication 10, caractérisée en ce qu'une vanne pour la séparation de l'air est montée entre les quatrième (30) et cinquième (31) postes de traitement, le cinquième poste étant prévu comme espace de refroidissement à contre-courant et attenant à un puits (2) qui comprend un dispositif pour le retour vertical des plateaux (4) d'une manière connue, vers le convoyeur principal.

FIG.1.

FIG.2.

Fig. 3.

Fig. 5.

Fig. 4.

3